# EUROPÄISCHE PATENTSCHRIFT

(11) **EP 2 869 732 B1**
(45) Veröffentlichungstag und Bekanntmachung des Hinweises auf die Patenterteilung: **04.04.2018**
(21) Anmeldenummer: 13731803.6
(22) Anmeldetag: 27.06.2013
(51) Int. Cl.: A47C 20/04, F16H 25/20, F16H 57/021

(54) **ELEKTROMOTORISCHER LINEARANTRIEB IN FORM EINES DOPPELANTRIEBS**
ELECTROMOTIVE LINEAR DRIVE IN THE FORM OF A DUAL DRIVE
ENTRAÎNEMENT LINÉAIRE ÉLECTROMOTEUR SOUS FORME DE MÉCANISME À DOUBLE ENTRAÎNEMENT

(30) Priorität: 03.07.2012 DE 102012211514
(43) Veröffentlichungstag der Anmeldung: 13.05.2015
(73) Patentinhaber: Dewertokin GmbH, 32278 Kirchlengern (DE)
(72) Erfinder: OBERNDÖRFER, Andreas, 33739 Bielefeld (DE); MARTIN, Jürgen, 32257 Bünde (DE)
(74) Vertreter: Lippert Stachow Patentanwälte Rechtsanwälte
(86) Internationale Anmeldenummer: PCT/EP2013/063466
(87) Internationale Veröffentlichungsnummer: WO 2014/005912

(56) Entgegenhaltungen:
- EP-A1- 1 900 309
- EP-A1- 2 080 452
- WO-A1-2013/068329

## Beschreibung

Die Erfindung betrifft einen elektromotorischen Linearantrieb in Form eines Doppelantriebs zum Verstellen von beweglich gelagerten Teilen von Liege- und Sitzmöbeln, insbesondere für den Krankenhaus- und Pflegebereich, mit zwei über jeweils ein Schneckenradgetriebe antreibbaren, hintereinander und zueinander fluchtend angeordneten Gewindespindeln zur Verschiebung jeweils eines Hubelements, an beiden Enden jeder Gewindespindel vorgesehenen Lagern, wobei zumindest die an den nahe beieinander liegenden Spindelenden angeordneten Lager als Wälzlager mit einem Innenring und einem Außenring ausgebildet sind. In der gattungsbildenden EP 2 080 452 A1 wird ein elektromorischer Linearantrieb in Form eines Doppelantriebs zum Verstellen von beweglich gelagerten Teilen von Liege- und Sitzmöbeln beschrieben. Bekannte elektromotorische Linearantriebe sind in der Regel von Kunststoffgehäusen umgeben, in denen die Einzelteile des jeweiligen Linearantriebs zwischen angeformten, vorspringenden Rippen des Gehäuses festgelegt sind. Problematisch ist dies insbesondere bei Doppelantrieben, die dadurch häufig aufgrund der Vielzahl der stabil ausgebildeten Rippen eine große Baulänge aufweisen müssen.

Der Erfindung liegt daher die Aufgabe zugrunde, einen elektromotorischen Doppelantrieb derart zu gestalten, dass eine kurze Baulänge erreicht wird und dass darüber hinaus die Festigkeit und Stabilität der Konstruktion erhöht wird. Erfindungsgemäß wird diese Aufgabe dadurch gelöst, dass zwischen den beiden Wälzlagern, die die nahe beieinander liegenden Spindelenden aufnehmen, ein Widerlager angeordnet ist, an dem sich die Wälzlager von beiden Seiten her gegenseitig abstützen.

Bei der erfindungsgemäßen Konstruktion braucht die Gegenkraft der Gewindespindeln daher nicht von dem Kunststoffgehäuse aufgenommen zu werden, sondern die beiden in Wälzlagern sitzenden, einander zugewandten Enden der Gewindespindeln stützen sich über die Wälzlager gegen das zwischen ihnen vorgesehene Widerlager ab. Aufgrund des vorgesehenen Widerlagers kann die Baulänge des Linearantriebs minimiert werden, während gleichzeitig die Kraftauflagefläche zwischen den Einzelteilen vergrößert und damit die Flächenpressung minimiert wird.

Das Widerlager kann in unterschiedlichen Varianten ausgebildet sein, die an die Platzverhältnisse und geometrischen Formen des den Linearantrieb umgebenden Kunststoffgehäuses angepasst sind. Eine einfache und sehr zweckmäßige Ausbildung des Widerlagers besteht darin, dass das Widerlager als Platte ausgebildet ist.

Zweckmäßig weist die Platte einen Durchmesser auf, der größer als der Außendurchmesser des Außenrings des Wälzlagers ist. Dadurch ist gewährleistet, dass der gesamte Umfangsbereich des Außenrings des Wälzlagers durch die Platte eine Abstützung erhält.

Vorzugsweise ist die Platte mit einer mittigen runden Öffnung versehen, deren Durchmesser kleiner als der innere Durchmesser des Außenrings des Wälzlagers ist. Die mittige Öffnung der Platte reduziert dabei nicht die Auflagefläche des Außenrings und gewährleistet aber darüber hinaus, dass der Außenring zuverlässig an der Platte anliegt, selbst wenn eventuelle innere Teile, wie der Innenring des Wälzlagers, das Ende des Führungskörpers oder das Spindelende, axial über die Ebene des Außenrings hinaus vorstehen.

Um Kollisionen mit eventuellen vorspringenden Teilen des Innenrings, des Führungskörpers bzw. des Spindelendes zu vermeiden, sollte der Durchmesser der mittigen runden Öffnung der Platte größer als der äußere Durchmesser des Innenrings des Wälzlagers sein.

Das zwischen den Lagern angeordnete Widerlager bzw. die Platte kann aus Metall, beispielsweise aus Stahl, bestehen. Das Widerlager kann auch aus einer Zink- oder Aluminiumlegierung bestehen. Dies ist insbesondere dann vorteilhaft, wenn das Widerlager eine an die inneren Verhältnisse des Gehäuses angepasste kompliziertere Gestalt aufweist, da dann das Widerlager beispielsweise im Druckgussverfahren hergestellt werden kann.

Alternativ ist es auch möglich, das Widerlager aus Kunststoff herzustellen, vorausgesetzt, dass dieser eine ausreichende Festigkeit aufweist. Um dies zu gewährleisten, kann das Widerlager aus hochfestem, faserverstärktem Kunststoff bestehen.

Um das als Platte ausgebildete Widerlager optimal in dem Kunststoffgehäuse des Linearantriebs zu haltern, ist diese vorzugsweise rechteckig oder auch quadratisch ausgebildet.

Alternativ kann die Platte auch mit abgerundeten Ecken ausgestaltet oder komplett rund ausgebildet sein.

Als Wälzlager dienen bei der vorliegenden Konstruktion insbesondere Kugellager.

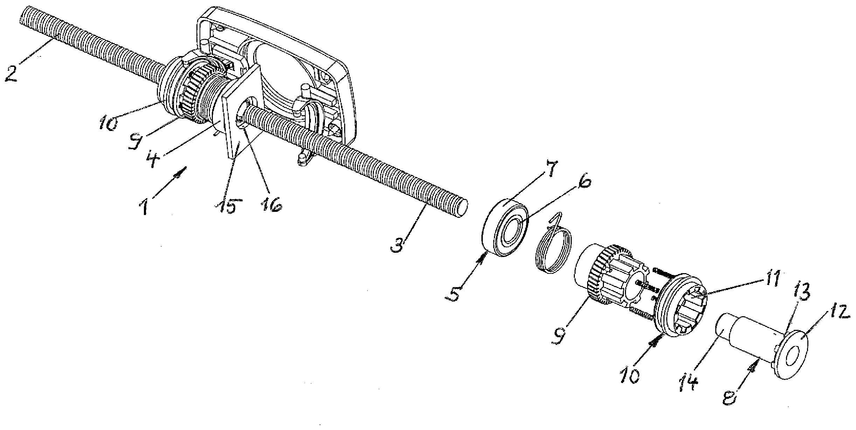

Die Erfindung ist in der Zeichnung anhand eines Ausführungsbeispiels veranschaulicht und im Nachstehenden im Einzelnen anhand der Zeichnung beschrieben.

In der einzigen Figur ist in perspektivischer Ansicht ein elektromotorischer Linearantrieb in Form eines Doppelantriebs dargestellt, welcher zum Verstellen von beweglich gelagerten Teilen von Liege- und Sitzmöbeln, insbesondere für den Krankenhaus- und Pflegebereich, dient. Aus Gründen der Übersichtlichkeit sind das Gehäuse sowie die beidseitigen Hubelemente weggelassen worden.

Auf der linken Seite der Zeichnung sind die einzelnen Getriebeteile zusammengesetzt, während auf der rechten Seite die Getriebeteile in Explosionsdarstellung gezeigt werden.

Im Wesentlichen besteht der Doppelantrieb 1 aus zwei über jeweils ein Schneckenradgetriebe antreibbaren, hintereinander und zueinander fluchtend angeordneten Gewindespindeln 2 und 3, die zur Verschiebung jeweils eines in der Zeichnung nicht dargestellte Hubelements zum Verstellen der beweglichen Möbelteile dienen.

An beiden Enden jeder Gewindespindel 2 bzw. 3 sind entsprechende Lager vorgesehen. In der Zeichnung sind allerdings nur die an den nahe beieinander liegenden Spindelenden angeordneten Lager dargestellt, die als Wälzlager 4 und 5 mit einem Innenring 6 sowie einem Außenring 7 ausgebildet sind.

Auf jeder der Gewindespindeln 2 und 3 ist ein Führungskörper 8 angeordneten, der dreh- und schiebefest auf der jeweiligen Gewindespindel 2 bzw. 3 sitzt.

Von den beiden Schneckenradgetrieben, welche die beiden Gewindespindeln 2 und 3 antreiben, sind in der Zeichnung nur die Schneckenräder 9 dargestellt, die drehbar auf dem jeweiligen Führungskörper 8 gelagert sind. Ferner ist ein axial verschiebliches, aber relativ zu dem jeweiligen Schneckenrad drehfest angeordnetes Kupplungselement 10 vorgesehen, mit dem das jeweilige Schneckenrad 9 mit dem zugehörigen Führungskörper 8 wahlweise kuppelbar bzw. entkuppelbar ist. Das Innenprofil 11 des Kupplungselements 10 bildet dabei mit einem an einem Flansch 12 des Führungskörpers 8 ausgebildeten Gegenprofil 13 eine Klauenkupplung, die durch Axialverschiebung des Kupplungselements 10 wahlweise ein- oder auskuppelbar ist.

Wenn die in Explosionsdarstellung gezeigten Teile zusammengefügt sind und der Führungskörper 8 auf der Gewindespindel 2 bzw. 3 befestigt ist, greift ein abgesetztes Ende 14 des Führungskörpers 8 in die mittlere Öffnung des Innenrings 6 des jeweiligen Wälzlagers 4 bzw. 5 ein.

Zwischen den beiden Wälzlagern 4 und 5, die die nahe beieinander liegenden Spindelenden aufnehmen, ist eine Stahlplatte 15 angeordnet, gegen die die beiden Wälzlager 4 und 5 von gegenüberliegenden Seiten aus anliegen. Die Platte 15, die in dem in der Zeichnung dargestellten Ausführungsbeispiel quadratisch ausgebildet ist, ist dabei so groß gewählt, dass die Außenringe 7 der Wälzlager 4 und 5 über ihren gesamten Umfang an der Platte 15 anliegen. Alternativ kann die Platte auch abgerundete Ecken aufweisen oder komplett rund ausgebildet sein.

Die Platte 15 weist eine mittige runde Öffnung 16 auf, die durch die Platte 15 hindurchgeht. Der Durchmesser der Öffnung 16 ist kleiner ausgebildet als der innere Durchmesser des Außenrings 7 der Wälzlager 4 und 5 ist. Dadurch ist gewährleistet, dass die Außenringe 7 der Wälzlager 4 und 5 rundum an den Flachseiten der Platte 15 anliegen.

Darüber hinaus ist der Durchmesser der mittigen runden Öffnung 16 der Platte 15 größer als der äußere Durchmesser des Innenrings 6 des jeweiligen Wälzlagers 4 bzw. 5 ausgebildet, sodass der Innenring nicht mit der Platte 15 in Berührung kommt.

Bei der in der Zeichnung dargestellten Konstruktion steht unter Umständen auch das abgesetzte Ende 14 des Führungskörpers 8 ein Stück über den Innenring 6 des jeweiligen Wälzlagers 4 bzw. 5 hinaus vor, sodass auch in dieser Hinsicht keine schädlichen Berührungen mit der Platte 15 auftreten.

Die Dicke der Platte 15 kann relativ gering ausgebildet sein. Es ist lediglich erforderlich, dass die Dicke der Platte 15 ausreicht, um zu verhindern, dass sich die rotierenden Teile der Gewindespindeln 2 und 3 bzw. der Führungskörper 8 berühren.

Die Platte 15 kann aus Stahl oder auch aus hochfestem Kunststoff, beispielsweise faserverstärktem Kunststoff, bestehen.

Die Wälzlager 4 und 5 sind als Kugellager ausgebildet.

Aufgrund der erfindungsgemäßen Konstruktion werden die beim Verstellen der Möbelteile auf die Gewindespindeln 2 und 3 ausgeübten Axialkräfte nicht auf das Gehäuse und eventuelle innere Halterippen übertragen sondern die Gewindespindeln 2 und 3 stützen sich über die Kugellager von beiden Seiten gegen die Platte 15 ab.

### Bezugszeichenliste

- 1: Doppelantrieb
- 2: Gewindespindel
- 3: Gewindespindel
- 4: Wälzlager
- 5: Wälzlager
- 6: Innenring des Wälzlagers
- 7: Außenring des Wälzlagers
- 8: Führungskörper
- 9: Schneckenräder
- 10: Kupplungselemente
- 11: Innenprofil der Kupplungselemente 10
- 12: Flansch der Führungskörper 8
- 13: Gegenprofil
- 14: abgesetztes Ende der Führungskörper 8
- 15: Platte
- 16: Öffnung der Platte 15

## Patentansprüche

1. Elektromotorischer Linearantrieb in Form eines Doppelantriebs zum Verstellen von beweglich gelagerten Teilen von Liege- und Sitzmöbeln, mit zwei über jeweils ein Schneckenradgetriebe antreibbaren, hintereinander und zueinander fluchtend angeordneten Gewindespindeln (2, 3) zur Verschiebung jeweils eines Hubelements sowie an beiden Enden jeder Gewindespindel (2, 3) vorgesehenen Lagern, wobei zumindest die an den nahe beieinander liegenden Spindelenden angeordneten Lager als Wälzlager (4, 5) mit einem Innenring (6) und einem Außenring (7) ausgebildet sind, **dadurch gekennzeichnet, dass** zwischen den beiden Wälzlagern (4, 5), die die nahe beieinander liegenden Spindelenden aufnehmen, ein Widerlager angeordnet ist, an dem sich die Wälzlager von beiden Seiten her gegenseitig abstützen.

2. Elektromotorischer Linearantrieb nach Anspruch 1,
**dadurch gekennzeichnet, dass** das Widerlager als Platte (15) ausgebildet ist.

3. Elektromotorischer Linearantrieb nach Anspruch 2,
**dadurch gekennzeichnet, dass** die Platte (15) einen Durchmesser aufweist, der größer als der Außendurchmesser des Außenrings (7) der Wälzlager (4, 5) ist.

4. Elektromotorischer Linearantrieb nach Anspruch 2 oder 3,
**dadurch gekennzeichnet, dass** die Platte (15) eine mittige runde Öffnung (16) aufweist, deren Durchmesser kleiner als der innere Durchmesser des Außenrings (7) der Wälzlager (4, 5) ist.

5. Elektromotorischer Linearantrieb nach Anspruch 4,
**dadurch gekennzeichnet, dass** der Durchmesser der mittigen runden Öffnung (16) der Platte (15) größer als der äußere Durchmesser des Innenrings (6) der Wälzlager (4, 5) ist.

6. Elektromotorischer Linearantrieb nach einem der Ansprüche 1 bis 5, **dadurch gekennzeichnet, dass** das Widerlager bzw. die Platte (15) aus Metall besteht.

7. Elektromotorischer Linearantrieb nach Anspruch 6,
**dadurch gekennzeichnet, dass** das Widerlager bzw. die Platte (15) aus Stahl besteht.

8. Elektromotorischer Linearantrieb nach Anspruch 6,
**dadurch gekennzeichnet, dass** das Widerlager bzw. die Platte (15) aus einer Zink- oder Aluminiumlegierung besteht.

9. Elektromotorischer Linearantrieb nach einem der Ansprüche 1 bis 5, **dadurch gekennzeichnet, dass** das Widerlager bzw. die Platte (15) aus Kunststoff besteht.

10. Elektromotorischer Linearantrieb nach Anspruch 9,
**dadurch gekennzeichnet, dass** das Widerlager bzw. die Platte (15) aus hochfestem, faserverstärktem Kunststoff besteht.

11. Elektromotorischer Linearantrieb nach einem der Ansprüche 2 bis 10, **dadurch gekennzeichnet, dass** die Platte (15) rechteckig bzw. quadratisch ausgebildet ist.

12. Elektromotorischer Linearantrieb nach einem der Ansprüche 2 bis 10, **dadurch gekennzeichnet, dass** die Platte abgerundete Ecken aufweist.

13. Elektromotorischer Linearantrieb nach einem der Ansprüche 2 bis 10, **dadurch gekennzeichnet, dass** die Platte rund ausgebildet ist.

14. Elektromotorischer Linearantrieb nach einem der Ansprüche 1 bis 13, **dadurch gekennzeichnet, dass** als Wälzlager (4, 5) Kugellager vorgesehen sind.

## Claims

1. An electric motor-actuated linear drive in the form of a dual drive for adjusting moveably mounted parts of lying and seating furniture, comprising two threaded spindles (2, 3) drivable by way of a respective worm gear transmission and arranged in successive and mutually aligned relationship for displacement of a respective stroke element and bearings provided at both ends of each threaded spindle (2, 3), wherein at least the bearings arranged at the spindle ends which are close to each other are in the form of rolling bearings (4, 5) having an inner race (6) and an outer race (7), **characterised in that** arranged between the two rolling bearings (4, 5) which carry the spindle ends that are close to each other is a support means at which the rolling bearings are mutually supported from both sides.

2. An electric motor-actuated linear drive according to claim 1 **characterised in that** the support means is in the form of a plate (15).

3. An electric motor-actuated linear drive according to claim 2 **characterised in that** the plate (15) is of a diameter larger than the outside diameter of the outer race (7) of the rolling bearings (4, 5).

4. An electric motor-actuated linear drive according to claim 2 or claim 3 **characterised in that** the plate (15) has a central round opening (16) whose diameter is smaller than the inside diameter of the outer race (7) of the rolling bearings (4, 5).

5. An electric motor-actuated linear drive according to claim 4 **characterised in that** the diameter of the central round opening (16) of the plate (15) is larger than the outside diameter of the inner race (6) of the rolling bearings (4, 5).

6. An electric motor-actuated linear drive according to one of claims 1 to 5 **characterised in that** the support means or the plate (15) comprises metal.

7. An electric motor-actuated linear drive according to claim 6 **characterised in that** the support means or the plate (15) comprises steel.

8. An electric motor-actuated linear drive according to claim 6 **characterised in that** the support means or the plate (15) comprises a zinc or aluminium alloy.

9. An electric motor-actuated linear drive according to one of claims 1 to 5 **characterised in that** the support means or the plate (15) comprises plastic.

10. An electric motor-actuated linear drive according to claim 9 **characterised in that** the support means or the plate (15) comprises high-strength, fibre-reinforced plastic.

11. An electric motor-actuated linear drive according to one of claims 2 to 10 **characterised in that** the plate (15) is rectangular or square.

12. An electric motor-actuated linear drive according to one of claims 2 to 10 **characterised in that** the plate has rounded corners.

13. An electric motor-actuated linear drive according to one of claims 2 to 10 **characterised in that** the plate is round.

14. An electric motor-actuated linear drive according to one of claims 1 to 13 **characterised in that** ball bearings are provided as the rolling bearings (4, 5).

## Revendications

1. Entraînement linéaire électromoteur sous forme de mécanisme à double entraînement pour ajuster des éléments supportés de manière mobile des couchettes et des sièges, comprenant deux tiges filetées (2, 3) respectives susceptibles d'être entraînées à l'aide d'un engrenage de vis sans fin et disposées l'une derrière l'autre d'une manière alignée l'une avec l'autre et servant à déplacer un élément de levage respective, et deux paliers prévus aux deux extrémités de chaque tige filetée (2, 3), dans lesquels au moins les paliers disposés aux extrémités des tiges filetées à proximité l'une de l'autre sont réalisés sous forme de paliers à roulement (4, 5) comprenant une bague intérieure (6) et une bague extérieure (7), **caractérisé en ce qu'**entre les deux paliers à roulement (4, 5) logeant les extrémités des tiges filetées à proximité l'une à l'autre est disposée une butée sur laquelle prennent appui mutuellement les paliers à roulement des deux côtés.

2. Entraînement linéaire électromoteur selon la revendication 1, **caractérisé en ce que** la butée est réalisée sous forme de plaque (15).

3. Entraînement linéaire électromoteur selon la revendication 2, **caractérisé en ce que** la plaque présente un diamètre supérieure au diamètre extérieur de la bague extérieure (7) des paliers à roulement (4, 5).

4. Entraînement linéaire électromoteur selon la revendication 2 ou 3, **caractérisé en ce que** la plaque (15) présente une ouverture arrondie centrale (16) dont le diamètre est inférieur au diamètre intérieur de la bague extérieure (7) des paliers à roulement (4, 5).

5. Entraînement linéaire électromoteur selon la revendication 4, **caractérisé en ce que** le diamètre de l'ouverture arrondie centrale (16) de la plaque (15) est supérieur au diamètre extérieur de la bague intérieure (6) des paliers à roulement (4, 5).

6. Entraînement linéaire électromoteur selon l'une des revendications 1 à 5, **caractérisé en ce que** la butée ou la plaque (15) consiste en un métal.

7. Entraînement linéaire électromoteur selon la revendication 6, **caractérisé en ce que** la butée ou la plaque (15) consiste en acier.

8. Entraînement linéaire électromoteur selon la revendication 6, **caractérisé en ce que** la butée ou la plaque (15) consiste en alliage de zinc ou d'aluminium.

9. Entraînement linéaire électromoteur selon l'une des revendications 1 à 5, **caractérisé en ce que** la butée ou la plaque (15) consiste en matière synthétique.

10. Entraînement linéaire électromoteur selon la revendication 9, **caractérisé en ce que** la butée ou la plaque (15) consiste en un matériau à résistance élevée renforcé par des fibres.

11. Entraînement linéaire électromoteur selon l'une des revendications 2 à 10, **caractérisé en ce que** la plaque (15) est rectangulaire ou carrée.

12. Entraînement linéaire électromoteur selon l'une des revendications 2 à 10, **caractérisé en ce que** la plaque présente des coins arrondis.

13. Entraînement linéaire électromoteur selon l'une des revendications 2 à 10, **caractérisé en ce que** la plaque est ronde.

14. Entraînement linéaire électromoteur selon l'une des revendications 1 à 13, **caractérisé en ce que** des paliers à rouleaux sont prévus comme paliers à roulement (4, 5).
